# EUROPEAN PATENT SPECIFICATION

(11) **EP 3 809 484 B1**
(45) Date of publication and mention of the grant of the patent: **26.07.2023**
(21) Application number: 18922434.8
(22) Date of filing: 13.11.2018
(51) Int. Cl.: H01M 4/06, H01M 4/70, H01M 4/76, H01M 10/04, H01M 10/0525, H01M 50/109, H01M 50/153, H01M 50/171, H01M 50/184

(54) **BUTTON BATTERY AND PREPARATION METHOD THEREFOR**
KNOPFBATTERIE UND HERSTELLUNGSVERFAHREN DAFÜR
PILE BOUTON ET SON PROCÉDÉ DE PRÉPARATION

(30) Priority: 15.06.2018 CN 201810622971
(43) Date of publication of application: 21.04.2021
(73) Proprietor: Yichang Power Glory Technology Co., Ltd., Xiaoting District Yichang, Hubei 443000 (CN)
(72) Inventor: WANG, Jian, Yichang, Hubei 443000 (CN); XIA, Qing, Yichang, Hubei 443000 (CN); YU, Zhongyuan, Yichang, Hubei 443000 (CN); XU, Jiekang, Yichang, Hubei 443000 (CN)
(74) Representative: Cabinet Chaillot
(86) International application number: PCT/CN2018/115199
(87) International publication number: WO 2019/237649

(56) References cited:
- CN-A- 102 315 480
- CN-A- 106 876 613
- CN-U- 201 717 321
- CN-U- 203 218 351
- CN-U- 204 927 423
- CN-U- 204 927 423
- CN-U- 204 927 423
- CN-U- 204 966 553
- CN-U- 207 165 621

## Description

### Technical field

The present invention relates to the field of button battery, in particular to a button battery.

### Background

Button battery is widely used as a power source in various microelectronic products due to its characteristics such as light weight and small volume etc. Generally, the button battery includes a positive electrode case, a negative electrode cover, and a cell and electrolyte located in a sealing cavity formed between the positive electrode case and the negative electrode cover. The positive electrode, the separating diaphragm, and the negative electrode are stacked in sequence and then folded or unfolded to form the cell. However, during the packaging of the positive electrode case and the negative electrode cover of the button battery and during the usage of the button battery, relative displacement and leakage between the positive electrode and the positive electrode case usually occur, which not only reduces the whole stability of the battery and anti-leakage performance, but also shortens the battery life. In addition, the button battery usually uses a cylindrical positive electrode, and if the cylindrical positive electrode expands during usage, its end face will press the separating diaphragm, which will easily cause the separating diaphragm to rupture and will also shorten the battery life. CN201717321U disclose a button battery according to prior art.

### Summary

In view of this, the embodiments of the present invention provide a button battery that can increase the capacity and the discharge power of the battery, expand the operating temperature range of the battery, improve the whole stability, storage, consistency and anti-leakage performance of the battery, and extend the battery life. The invention is defined in the appended claims.

In order to achieve the above purpose, the technical solution of the present invention is realized as follows:
The embodiments of the present invention provide according to claim 1 a button battery, comprising a negative electrode cover, a positive electrode case, a sealing ring, a positive electrode, a separating diaphragm, a negative electrode and electrolyte, wherein the sealing ring is hermetically connected with the negative electrode cover and the positive electrode case and makes the negative electrode cover and the positive electrode case form a sealing cavity, and the positive electrode, the separating diaphragm, the negative electrode and the electrolyte are arranged in the sealing cavity; the button battery further comprises a base arranged in the positive electrode case; the base comprises an outer ring wall, an inner ring wall, and a top wall for connecting the outer ring wall with the inner ring wall, and the outer ring wall, the inner ring wall and the top wall form an annular cavity, and the top wall abuts against the sealing ring; the annular cavity is provided with a first through hole for entering and exiting of electrolyte and/or gas; the positive electrode is partially located in an inner ring of the base, and the positive electrode has a boss structure and/or an end face of the positive electrode is provided with a chamfer.

In the above solution, the top wall of the base extends toward the sealing ring to form an annular protrusion.

In the above solution, an opening of the negative electrode cover is bent outward and extends upward to form a sealing edge, and the sealing ring is arranged on the sealing edge to seal the gap between an opening of the positive electrode case and an opening of the negative electrode cover; the annular protrusion is arranged just below the bending portion of the sealing edge.

In the above solution, the top wall of the base is connected with the inner ring wall and the outer ring wall by arcs respectively.

In the above solution, the inner ring wall and the outer ring wall of the base are annular walls arranged concentrically, and the annular cavity is an annular groove with an opening facing toward the bottom of the positive electrode case.

In the above solution, the bottom of the inner ring wall of the base has a flange extending inward in a direction perpendicular to the inner ring wall, and the flange is fit with the positive electrode case.

In the above solution, the bottom of the base is provided with a fixing piece and at least two connecting pieces connecting the fixing piece withthe flange; the fixing piece is connected with the positive electrode case.

In the above solution, the outer diameter of the base is adapted to the inner diameter of the positive electrode case, the outer ring wall of the base is provided with an elastic protrusion, and the base is buckle-connected with the positive electrode case through the elastic protrusion.

In the above solution, the sealing ring is provided with an annular embedding groove adapted to the annular protrusion toward the bottom of the base.

In the above solution not part of the claimed invention, the bottom of the inner ring wall of the base has an annular positioning sleeve extending inward in a direction parallel to the inner ring wall, the positive electrode is partially located in the annular positioning sleeve, and the annular positioning sleeve is provided with a second through hole for entering and exiting of electrolyte.

In the button battery provided by the embodiments of the present invention, by providing a base with an annular cavity, compared with the prior art using a sealing ring to form a support, the space occupied by the sealing ring is reduced, and the capacity space of electrolyte is increased through the annular cavity, so that during the discharge, the battery has enough electrolyte to conduct charged ions, reduce electrode polarization, thereby increasing the discharge power of the battery, and the annular cavity can form a fixed support for the positive electrode, improving the whole stability of the battery, and correspondingly improving the mechanical strength of the battery, so that the battery can operate at a higher temperature; through the outer ring wall, the inner ring wall and the top wall of the base, parts such as the sealing ring and the negative electrode cover etc. are multiple supported, so that the sealing performance of the sealing ring is better and the anti-leakage effect is better; the boss structure of the positive electrode makes the area around the convex portion of the boss be used as an expansion space when the positive electrode expands, so that the convex portion of the boss has room for expansion in all directions; in addition, gases such as carbon dioxide etc. generated during the operation of the battery, can enter the annular cavity through the first through hole, reduce the pressure inside the battery and can effectively prevent the leakage and deformation of the battery due to the expansion of the battery. Therefore, the button battery provided by the embodiments of the present invention, by providing a base with an annular cavity and a positive electrode with a boss structure and/or a chamfered end face, can increase the capacity and the discharge power of the battery, expand the operating temperature range of the battery, improve the whole stability, storage, consistency and anti-leakage performance of the battery, and extend the battery life.

### Description of drawings

FIG. 1 is a schematic diagram of the structure of a button battery in an embodiment of the present invention;
FIG. 2 is a schematic diagram of the structure of a button battery in another embodiment of the present invention;
FIG. 3 is a schematic diagram of the structure of a button battery in a further embodiment of the present invention;
FIG. 4 is a schematic diagram of the structure of a button battery in an embodiment of the present invention;
FIG. 5 is a schematic diagram of the structure of a base in an embodiment of the present invention from a visual angle;
FIG. 6 is a schematic diagram of the structure of a base in an embodiment of the present invention from another visual angle;
FIG. 7 is a sectional view of the base;
FIG. 8 is a partially enlarged schematic diagram of FIG. 2;
FIG. 9 is a schematic diagram of the structure of a base in another embodiment of the present invention;
FIG. 10 is a schematic diagram of the structure of a sealing ring in an embodiment of the present invention;
FIG. 11 is a sectional view of a negative electrode cover and a sealing ring;
FIG. 12 is a partially enlarged schematic diagram of A in FIG. 11;
FIG. 13 is a schematic diagram of the structure of a button battery in an embodiment of the present invention;
FIG. 14 is a schematic diagram of the 3D structure of a positive electrode in an embodiment of the present invention from a visual angle;
FIG. 15 is a schematic diagram of the 3D structure of a positive electrode in an embodiment of the present invention from another visual angle;
FIG. 16 is a schematic diagram of the structure of a button battery in an embodiment of the present invention;
FIG. 17 is a schematic diagram of the structure of a base in another embodiment of the present invention;
FIG. 18 is a schematic diagram of a 15K constant resistance discharge curve, at room temperature, of a button battery in an embodiment of the present invention;
FIG. 19 is a schematic diagram of a 15K constant resistance discharge curve, stored at 60°C for 40 days, of a button battery in an embodiment of the present invention;
FIG. 20 is a schematic diagram of a 15K constant resistance discharge curve, stored at 85°C for 40 days, of a button battery in an embodiment of the present invention;
FIG. 21 is a schematic diagram of a 15K constant resistance discharge curve, at a different temperature, of a button battery in an embodiment of the present invention;
FIG. 22 is a schematic diagram of the 3D structure of an existing CR2032 button battery after collision;
FIG. 23 is a schematic diagram of the 3D structure of an improved CR2032 button battery after collision; and
FIG. 24 is a schematic flow diagram of a method for preparing a button battery in an embodiment of the present invention.

### Detailed description

In order to better explain the embodiments, some components in the drawings may be omitted, enlarged or reduced, and do not represent the size of the actual product; it may be understood for those skilled in the art that some well-known structures in the drawings and the descriptions thereof may be omitted. For those ordinarily skilled in the art, the specific meaning of the above terms in the present invention can be understood under specific circumstances. The technical solutions of the present invention will be further described below with reference to the drawings and embodiments.

### Embodiment 1

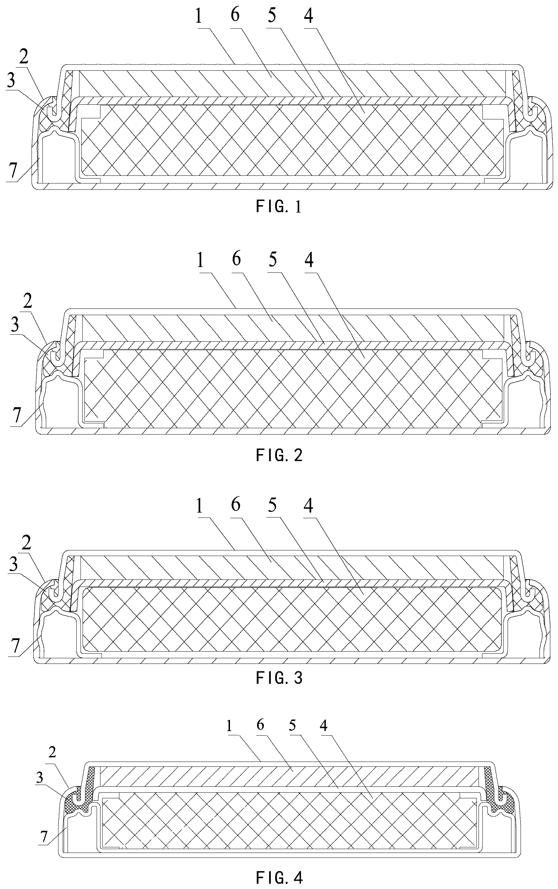

By referring FIGs. 1-7, there is provided a button battery by the embodiments of the present invention, the button battery comprises a negative electrode cover 1, a positive electrode case 2, a sealing ring 3, a positive electrode 4, a separating diaphragm 5, a negative electrode 6 and electrolyte, wherein the sealing ring 3 is hermetically connected with the negative electrode cover 1 and the positive electrode case 2 and makes the negative electrode cover 1 and the positive electrode case 2 form a sealing cavity, and the positive electrode 4, the separating diaphragm 5, the negative electrode 6 and the electrolyte are arranged in the sealing cavity; the button battery further comprises a base 7 arranged in the positive electrode case 2; the base 7 comprises an outer ring wall 71, an inner ring wall 72, and a top wall 73 for connecting the outer ring wall 71 with the inner ring wall 72, and the outer ring wall 71, the inner ring wall 72 and the top wall 73 form an annular cavity, and the top wall 73 abuts against the sealing ring 3; the annular cavity is provided with a first through hole 74 for entering and exiting of electrolyte and/or gas; the positive electrode 4 is partially located in an inner ring of the base 7, and the positive electrode 4 has a boss structure and/or an end face of the positive electrode 4 is provided with a chamfer, the chamfer may be a chamfered round corner, a chamfered oblique corner, or the like. The end face includes an upper end face and a lower end face. The end face of the positive electrode 4 closing to the separating diaphragm 5 is the upper end face of the positive electrode 4, and the end face of the positive electrode 4 closing to the positive electrode case 2 is the lower end face of the positive electrode 4. As an optional embodiment, please refer to FIG. 1 again, the positive electrode 4 has a unidirectional boss structure and the lower end face is provided with a chamfered round corner. As another optional embodiment, please refer to FIG. 2 again, the positive electrode 4 has a bidirectional boss structure. As a further optional embodiment, please refer to FIG. 3 again, both the upper end face and the lower end face of the positive electrode 4 are provided with a chamfered round corner. It should be noted that the positive electrode 4 may have only the upper end face provided with a chamfer, or neither the upper end face nor the lower end face is chamfered. The base 7 may be fixedly connected with the positive electrode case 2, and the positive electrode 4 may be fixedly connected with the base 7.

It may be understood that the structures of the negative electrode cover 1, the positive electrode case 2, the sealing ring 3, the separating diaphragm 5 and the negative electrode 6 etc. can be substantially the same as the structures of the corresponding parts in the existing button battery, and will not be described in detail in the embodiment. The positive electrode 4 is partially located in the inner ring of the base 7, which can be understood that the positive electrode 4 is located in the inner ring of the base 7 and protrudes from the base 7. Wherein, the lower end face of the positive electrode 4 faces toward the inside of the positive electrode case 2, the upper end face of the positive electrode 4 faces toward the separating diaphragm 5, the lower end face of the negative electrode 6 faces toward the separating diaphragm 5, and the upper end face of the negative electrode 6 faces toward the inside of the negative electrode cover 1. The positive electrode 4 can be made of a positive electrode material such as manganese dioxide etc.; the separating diaphragm 5 can be a fiber membrane or the like to separate the positive electrode 4 from the negative electrode 6 and can absorb electrolyte; the negative electrode 6 can be made of a negative electrode material such as lithium etc. The negative electrode cover 1 and the positive electrode case 2 are both circular cover structures made of metal materials, and the sealing ring 3 can be made of an insulating material with sealing performance, such as an annular plastic ring or an annular rubber ring. The diameter of the separating diaphragm 5 is not only greater than the diameter of the cross section of the positive electrode 4, but also greater than the diameter of the cross section of the negative electrode 6 to ensure that the positive electrode 4 can be completely separated from the negative electrode 6. The top wall 73 can be a flat plane, an inclined plane or a curved plane etc., and the outer ring wall 71, the inner ring wall 72 and the top wall 73 can be integrally formed by stamping with a steel or aluminum strip with a thickness of 0.1 - 0.3 mm etc. The first through hole 74 can be a circular hole or a square hole, and is provided on the inner ring wall 72 and/or the top wall 73 according to actual needs.

It should be noted that the outer ring wall 71, the inner ring wall 72 and the top wall 73 of the base can form multiple support on components such as the sealing ring 3 and the negative electrode cover 1 etc., and when the components such as the sealing ring 3 and the negative electrode cover 1 etc. are subjected to external pressure, the outer ring wall 71, the inner ring wall 72 and the top wall 73 are not easily deformed and do not affect the sealing effect of the sealing ring 3 between the negative electrode cover 1 and the positive electrode case 2, that is to say, because the base has the outer ring wall 71, the inner ring wall 72 and the top wall 73, the sealing performance of the sealing ring 3 is stable, and the anti-leakage effect is good. In addition, since the outer ring wall 71, the inner ring wall 72 and the top wall 73 are not easily deformed when being subjected to pressure, it can ensure that there is no relative displacement between the base 7 and the positive electrode case 2, that is, it can ensure accordingly that there is no relative displacement among the positive electrode 4, the base 7 and the positive electrode case 2, which improves the whole stability of the battery and the quality of the battery. In addition, the annular cavity can be used to accommodate electrolyte, and through the first through hole 74 on the annular cavity, the electrolyte accommodated in the annular cavity can be used by the positive electrode 4 during the operation of the battery. The annular cavity increases the amount of electrolyte in the battery and reduces the polarization during the discharge of the battery, thereby increasing the discharge power and discharge capacity of the battery. In addition, the boss structure or the end face of the positive electrode 4 is designed with the chamfered corner, so that if the positive electrode 4 expands during usage, the area around the convex portion of the corresponding boss and the chamfer can be used as an expansion space, that is, so that when the positive electrode 4 expands, there is room for expansion, which effectively avoids the defect of breaking the separating diaphragm 5 due to expansion of the positive electrode 4, and improves the battery life.

In conclusion, in the button battery provided by the above embodiment, by providing the base 7 with an annular cavity, compared with the prior art using a sealing ring to form a support, the space occupied by the sealing ring 3 is reduced, and the capacity space of electrolyte is increased through the annular cavity, the amount of electrolyte in the battery is increased and the polarization during discharge of the battery is reduced, thereby increasing the discharge power and discharge capacity of the battery. In addition, the annular cavity can form a fixed support for the positive electrode 4, improving the whole stability of the battery, and correspondingly improving the mechanical strength of the battery, so that the battery can operate at a higher temperature; through the outer ring wall 71, the inner ring wall 72 and the top wall 73 of the base, parts such as the sealing ring 3 and the negative electrode cover 1 etc. are multiple supported, so that the sealing performance of the sealing ring 3 is stable and the anti-leakage effect is good; the boss structure of the positive electrode 4 or the end face provided with a chamfer makes the area around the convex portion of the corresponding boss and the end face can be used as an expansion space when the positive electrode 4 expands, that is, so that when the positive electrode 4 expands, there is room for expansion, which effectively avoids the defect of breaking the separating diaphragm due to expansion of the positive electrode 4, and improves the battery life; in addition, gases such as carbon dioxide etc. generated during the operation of the battery, can enter the annular cavity through the first through hole 74, reduce the pressure inside the battery and can effectively prevent the leakage of the battery due to the expansion of the battery. For example, during the operation of the battery, carbon dioxide is generated under the catalytic action of manganese dioxide in the positive electrode, and the carbon dioxide enters the annular cavity through the first through hole 74, which can reduce the gas pressure inside the battery, thereby preventing the expansion of the battery. In addition, due to the high whole stability of the battery and good anti-leakage performance, the storage of the battery is improved correspondingly.

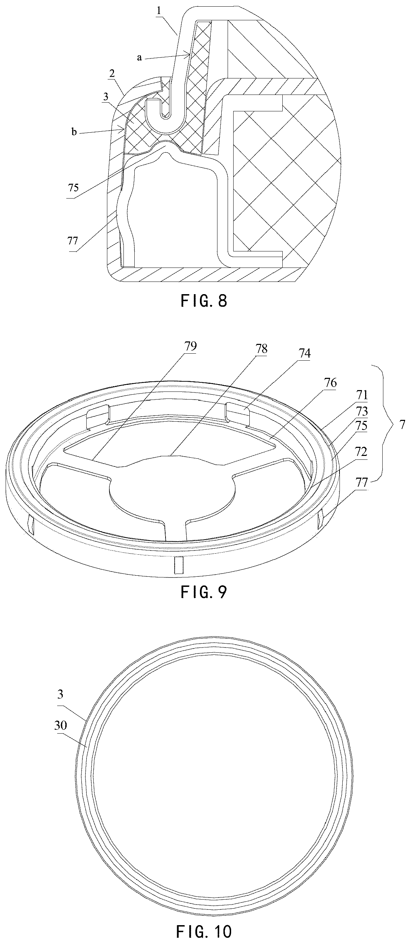

In an optional embodiment, please refer to FIGs. 1-7 again, the top wall 73 of the base 7 extends toward the sealing ring 3 to form an annular protrusion 75. When the negative electrode cover 1 is closed with the positive electrode case 2, the annular protrusion 75 presses the sealing ring 3, so that the sealing ring 3 is changed from the longitudinal extrusion to being pressed along the edge of the annular protrusion 75, increasing the lateral pressure of the sealing ring 3 on both sides, the sealing ring 3 is more closely connected with the positive electrode case 2 and the negative electrode cover 1 to prevent the electrolyte from leaking outward from the contact position between the sealing ring 3 and the negative electrode cover 1 and the contact position between the sealing ring 3 and the positive electrode case 2, thereby prolonging the battery life. Here, the number of the annular protrusion 75 may be one or more, and in the embodiment, the number of the annular protrusion 75 being one is taken as an example. Assuming that the path where the electrolyte leaks outward between the sealing ring 3 and the negative electrode cover 1 is called the internal leakage path a, and the path where the electrolyte leaks outward between the sealing ring 3 and the positive electrode case 2 is called the external leakage path b, please refer to FIG. 8, which means the internal leakage path a and the external leakage path b of the battery. It can be seen from the figure that when the negative electrode cover 1 is closed with the positive electrode case 2, the annular protrusion 75 presses the sealing ring 3, which can extend the external leakage path and make the contact between the positive electrode case 2 and the sealing ring 3 closer, that is, further seal the external leakage path, and at the same time, make the contact between the negative electrode cover 1 and the sealing ring 3 tight, that is, further seal the internal leakage path.

In an optional embodiment, the annular protrusion 75 may be inverted V-shaped, inverted U-shaped or arc-shaped. When the inverted V shape, inverted U shape or arc shape is adopted, the annular protrusion 75 has a better pressing effect on the sealing ring 3 when the negative electrode cover 1 is closed with the positive electrode case 2, so that the contact between the sealing ring 3 and the negative electrode cover 1 and the positive electrode case 2 is tight, and the anti-leakage effect is better. It may be understood that the annular protrusion 75 of any shape that can press the sealing ring 3 when the negative electrode cover 1 is closed with the positive electrode case 2 is possible.

In an optional embodiment, please refer to FIGs. 1 - 3 and 8 again, an opening of the negative electrode cover 1 is bent outward and extends upward to form a sealing edge, and the sealing ring 3 is arranged on the sealing edge to seal the gap between an opening of the positive electrode case 2 and an opening of the negative electrode cover 1; the annular protrusion 75 is arranged just below the bending portion of the sealing edge.

Here, when the negative electrode cover 1 is closed with the positive electrode case 2, the top wall 73 of the base 7 will press the sealing ring 3. At this time, the pressure on the sealing ring 3 not only comes from the pressure from the annular protrusion 75, but also from the pressure from the bending portion of the sealing edge, increasing the pressure between the sealing ring 3 and the positive electrode case 2 and the negative electrode cover 1 respectively. In this way, by increasing the source of pressure on the sealing ring 3, the fitting effect, namely the sealing effect, between the sealing ring 3 and the positive electrode case 2 and the negative electrode cover 1 is further enhanced, thereby further improving the anti-leakage performance.

In an optional embodiment, the annular protrusion 75 is arranged on the center line of the cross section of the sealing ring 3.

Here, when the annular protrusion 75 is arranged on the center line of the cross section of the sealing ring 3, the longitudinal pressing force of the annular protrusion 75 on the sealing ring 3 will be made uniform, so that the sealing performance between the sealing ring 3 and the positive electrode case 2 and the negative electrode cover 1 is further improved.

In an optional embodiment, the top wall 73 of the base 7 is connected with the inner ring wall 72 and the outer ring wall 71 by arcs respectively.

Here, the radius of the arc connecting the top wall 73 and the inner ring wall 72 of the base 7 and the radius of the arc connecting the top wall 73 and the outer ring wall 71 of the base 7 may be the same, and the radius of the arc may be is 0.2 ~ 0.5mm.

In this way, through the arc connection design, the sealing performance between the sealing ring 3 and the positive electrode case 2 and the negative electrode cover 1 is improved, and the base 7 is easily placed in the positive electrode case 2.

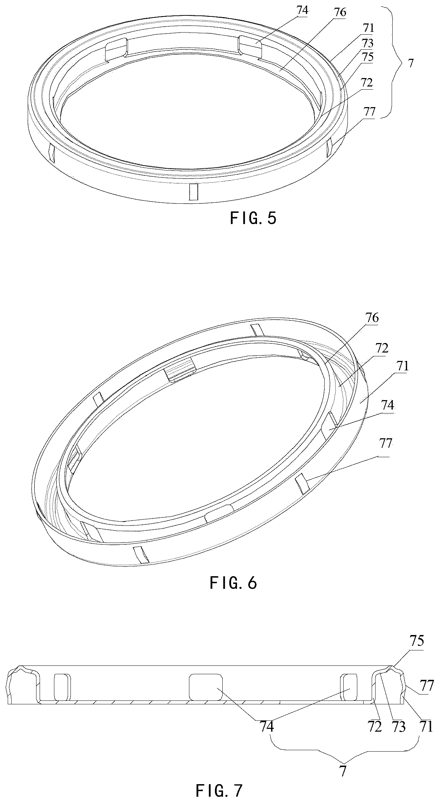

In an optional embodiment, please refer to FIGs. 5-7 again, the inner ring wall 72 and the outer ring wall 71 of the base 7 are annular walls arranged concentrically, and the annular cavity is an annular groove with an opening facing toward the bottom of the positive electrode case 2.

Here, the inner ring wall 72 and the outer ring wall 71 of the base 7 are parallel to each other, and the bottom end of the inner ring wall 72 of the base 7 is flush with the bottom end of the outer ring wall 71 and contacts with the bottom of the positive electrode case 2. The diameter of the outer ring wall 71 should be smaller than the inner diameter of the positive electrode case 2 so that the base 7 can be placed in the positive electrode case 2, and the diameter of the inner ring wall 72 should be slightly larger than the diameter of the positive electrode 4 so that the positive electrode 4 can be placed in the base 7. In addition, the inner diameter of the sealing ring 3 should be slightly larger than the diameter of the inner ring wall 72. In practical applications, the inner ring wall 72 and the outer ring wall 71 of the base 7 can be arranged vertically and the distance between the two walls is 1.5 ~ 3.5 mm, that is, the width of the annular groove is 1.5 ~ 3.5 mm. It should be noted that the part of the positive electrode case 2 far away from the negative electrode cover 1 is the bottom of the positive electrode case 2; the annular cavity is an annular groove with an opening facing toward the bottom of the positive electrode case 2, which can also be understood as the annular cavity being the opening facing toward the positive electrode case 2 far away from the bottom of the negative electrode cover 1.

Therefore, when the inner ring wall 72 and the outer ring wall 71 of the base 7 are annular walls arranged concentrically, the formed annular cavity is also a standard annular shape, which will make the distribution of electrolyte around the positive electrode 4 more uniform, and make the soaking effect of the positive electrode 4 better. The annular cavity is an annular groove with an opening facing toward the bottom of the positive electrode case 2, which can reduce the space occupied by the structure of the annular cavity itself in the battery while ensuring the stability of the annular cavity itself, and further improve the accommodating space of the annular cavity, that is, the annular cavity can accommodate more electrolyte and/or gas.

In an optional embodiment, please refer to FIGs. 1 - 6 again, the bottom of the inner ring wall 72 of the base 7 has a flange 76 extending inward in a direction perpendicular to the inner ring wall, and the flange 76 is fit with the positive electrode case 2.

Here, the flange 76 can be not only used as a support surface (also referred to as a mounting surface) of the positive electrode 4, but also can increase the contact area between the base 7 and the positive electrode case 2, and can also be used as a connecting surface with the positive electrode case 2. For example, the flange 76 is connected with the positive electrode case 2 by laser welding. The flange 76 and the positive electrode case 2 may also be fit and fixedly connected. As a specific embodiment, the flange 76 may be an annular plane with a width of 1.0 ~ 2.0 mm, and the inner diameter and outer diameter thereof can be set according to actual conditions. It may be understood that other shapes of the flange 76 are also possible, such as flange formed by symmetrically extending the bottom of the inner ring wall 72 or multi-angle flange, and the flange can also be square or round etc. In this way, by providing the flange on the base, the contact area between the base and the positive electrode case can be increased, thereby improving the conductivity and the quality of the battery.

In an optional embodiment, please refer to FIGs. 5, 6, 8 or 9, the outer diameter of the base 7 is adapted to the inner diameter of the positive electrode case 2, the outer ring wall 71 of the base 7 is provided with an elastic protrusion 77, and the base 7 is buckle-connected with the positive electrode case 2 through the elastic protrusion 77.

In this way, when the base 7 is installed with the positive electrode case 2, it is done by buckle-connecting the base 7 with the positive electrode case 2 through the elastic protrusion 77, which not only greatly improves the stability of the base 7 in the positive electrode case 2, that is, improves the stability of the battery correspondingly, but also has the characteristics of convenient installation.

In an optional embodiment, please refer to FIG. 9, the bottom of the base 7 is provided with a fixing piece 78 and at least one connecting piece 79 connecting the fixing piece 78 with the inner ring wall 72 of the base 7; the fixing piece 78 is connected with the positive electrode case 2.

Here, when the base 7 does not have a flange 76, the at least one connecting piece 79 can be directly connected with the bottom of the inner ring wall 72 of the base 7, thereby fixing the fixing piece 78 on the base 7; when the base 7 has a flange 76, the at least one connecting piece 79 can be directly connected with the flange 76 to fix the fixing piece 78 on the base 7. The fixing piece 78 may be round or square, etc. In the embodiment, the fixing piece is round and the diameter of the fixing piece 78 is smaller than the inner diameter of the flange 76. The fixing piece 78 is connected with the positive electrode case 2, and the fixing piece 78 may be welded to the positive electrode case 2. In the embodiment, the base 7 has an outer diameter of 24 mm, an inner diameter of 20 mm, and a height of 2.3 mm, the diameter of the fixing piece 78 is 9 mm, and the height of the flange 76 is 1 mm, which is taken as an example. In the embodiment, the bottom of the base 7 is provided with the fixing piece 78 and three connecting pieces 79 connecting the fixing piece 78 with the inner ring wall 72 of the base 7, which is taken as an example.

In this way, by arranging the fixing piece 78 and at least one connecting piece 79 at the bottom of the base 7, not only the fixing and conductive effect of the positive electrode 4 is improved, but also the contact area between the positive electrode 4 and the positive electrode case 2 can be ensured when the positive electrode case 2 is deformed by heat or force, so that the battery has good electrical performance.

In an optional embodiment, when there are at least two connecting pieces 79, the central axes of the fixing piece 78 and the positive electrode case 2 are coincident with each other; the at least two connecting pieces 79 are evenly arranged on the same circumference with the center of the fixing piece 78 as the center of circle, and the at least two connecting pieces 79 are fit and fixedly connected to the positive electrode case 2. In this way, the central axes of the fixing piece 78 and the positive electrode case 2 are coincident with each other to ensure that the positive electrode 4 and the positive electrode case 2 are concentric. The at least two connecting pieces 79 are evenly arranged on the same circumference with the center of the fixing piece 78 as the center of circle, which can ensure the uniformity of the force of the fixing piece 78 in all directions, and the contact area between the positive electrode 4 and the positive electrode case 2 can be further ensured when the positive electrode case 2 is deformed by heat or force, so that the battery has good electrical performance.

In an optional embodiment, the first through hole 74 is provided on the inner ring wall 72 and/or the top wall 73 of the base 7.

Here, the first through hole 74 may be a circular hole or a square hole, etc., the number of the first through hole 74 can be set according to actual needs, for example, the number of the first through hole 74 are set to 12, 24, etc. In this way, by providing the first through hole 74 on the inner ring wall 72 and/or the top wall 73 of the base 7, the electrolyte stored in the annular cavity can easily enter the sealing cavity formed by the negative electrode cover 1 and the positive electrode case 2, to ensure the normal and stable operation of the battery; in addition, it is also convenient for carbon dioxide and other gases generated by during the operation of the battery to enter the annular cavity, thereby reducing the pressure inside the battery.

In an optional embodiment, an end of the inner ring wall 72 closing to the flange 76 is provided with a lower first through hole, and an end thereof far away from the flange 76 is provided with an upper first through hole.

Here, the lower first through hole and the upper first through hole may be evenly arranged on the inner ring wall 72 around the center of circle of the annular cavity respectively, and the number of the lower first through hole and the upper first through hole may be 4 ~ 12 respectively, or may be more than 12, and the lower first through hole and the upper first through hole may be a circular hole or a square hole, and when the lower first through hole and the upper first through hole are circular holes, the diameter of the circular hole may be 0.5 ~ 1.5mm. In practical applications, the lower first through holes and the upper first through holes may be alternately arranged on the inner ring wall 72.

In this way, multiple first through holes are provided at different heights of the inner ring wall 72, so that when the battery is in different directions, the electrolyte in the annular cavity can flow into the sealing cavity to be used by the positive electrode, so as to ensure the normal operation of the battery, the electrode polarization is reduced, and the discharge power, discharge capacity and life of the battery are improved.

In an optional embodiment, the sealing ring 3 is injection molded on the sealing edge, and the height of the sealing ring 3 is 1 ~ 4mm.

Here, the sealing ring 3 is injection molded on the sealing edge, which can be considered that the sealing ring 3 and the negative electrode case 1 are integrally formed. Through the integrally forming design, the sealing effect between the sealing ring 3 and the negative electrode case 1 can be improved, that is, the anti-leakage performance of the battery can be improved.

In an optional embodiment, please refer to FIG. 2 again, the positive electrode 4 has a bidirectional boss structure, in which one boss is in contact with the separating diaphragm 5 and the other boss faces toward the bottom of the positive electrode case 2 far away from the negative electrode cover 1.

Here, the height of the convex portion of the boss of the positive electrode 4, facing toward the bottom of the positive electrode case 2 far away from the negative electrode cover 1 matches the height of the flange 76. In this way, through the design of the bidirectional boss structure, the positive electrode 4 has expansion and accommodation space above and below, which extends the battery life.

In an optional embodiment, the interval of the ratio of the height of the convex portion of the boss to the overall height of the boss is (0.06 - 0.5):1, and the interval of the ratio of the diameter of the convex portion of the boss to the maximum diameter of the boss is (0.65 - 0.85):1.

In this way, while ensuring that the positive electrode 4 has expansion space, it also ensures that the battery has a larger capacity.

In an optional embodiment, please refer to FIGs. 10 - 12, the bottom of the sealing ring 3 facing toward the base 7 is provided with an annular embedding groove 30 adapted to the annular protrusion 75.

It may be understood that if the bottom of the sealing ring 3 facing toward the base 7 is not provided with an annular embedding groove 30 that is adapted to the annular protrusion 75, and the bottom of the sealing ring 3 facing toward the base 7 is horizontal, then when the negative electrode cover 1 is closed with the positive electrode case 2, the annular protrusion 75 may not abut against the center line of the cross section of the sealing ring 3 or the intermediate position of the bottom of the sealing ring 3 facing toward the base 7, so that the lateral pressing force of the annular protrusion 75 on the sealing ring 3 is uneven, that is, the sealing ring 3 has problems such as uneven force direction etc., which may cause the sealing effect between the sealing ring 3 and the positive electrode case 2 different from the sealing effect between the sealing ring 3 and the negative electrode cover 1, resulting in unstable sealing performance; in addition, if the battery expands during the operation, the edge portion of the positive electrode may fall into the gap between the annular protrusion 75 and the sealing ring 3 during the lateral expansion, so that the positive electrode and the negative electrode cannot conduct there-between, resulting in the battery failure. If the bottom of the sealing ring 3 facing toward the base 7 is provided with an annular embedding groove 30 that is adapted to the annular protrusion 75, then when the negative electrode cover 1 is closed with the positive electrode case 2, the annular protrusion 75 is embedded into the annular embedding groove 30 at the bottom of the sealing ring 3, there will be no gap between the annular protrusion 75 and the sealing ring 3, and the sealing effect between the sealing ring 3 and the positive electrode case 2 is the same as the sealing effect between the sealing ring 3 and the negative electrode cover 1, further sealing the internal leakage path and the external leakage path, making the sealing performance more stable.

Here, the height of the annular protrusion 75 relative to the top wall 73 may be slightly larger than the height of the annular embedding groove 30 relative to the bottom of the sealing ring 3 facing toward the base 7, so that when the annular protrusion 75 is embedded into the annular embedding groove 30, it is ensured that the circumference of the annular embedding groove 30 is deformed, so that the contact between the positive electrode case 2 and the sealing ring 3 and the contact between the negative electrode cover 1 and the sealing ring 3 are tight.

In this way, when the negative electrode cover 1 is closed with the positive electrode case 2, the annular protrusion 75 is embedded into the annular embedding groove 30 at the bottom of the sealing ring 3, further sealing the internal leakage path and the external leakage path, improving the anti-leakage performance.

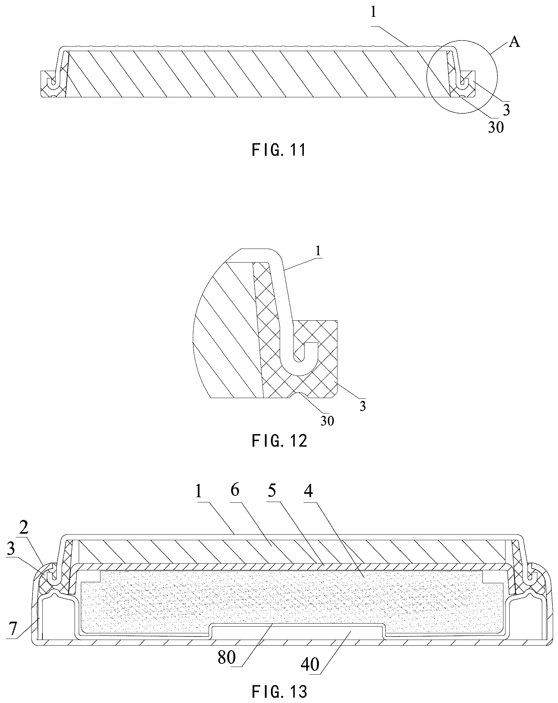

In an optional embodiment, please refer to FIGs. 13 - 15, the positive electrode 4 is recessed inward toward the bottom of the bottom surface of the positive electrode case 2 to form a positioning groove 40, and the bottom of the inner ring wall 72 of the base 7 extends inward and is provided with a positioning boss 80 at a position corresponding to the positioning groove 40.

During installation, the positioning boss 80 is accommodated in the positioning groove 40, which can prevent the positive electrode 4 from moving in the radial direction and improve the stability of the positive electrode 4. Wherein, the shape of the positioning boss 80 and the positioning groove 40 can be set according to actual needs. In the embodiment, the positioning boss 80 and the positioning groove 40 can be arranged in a cylindrical structure.

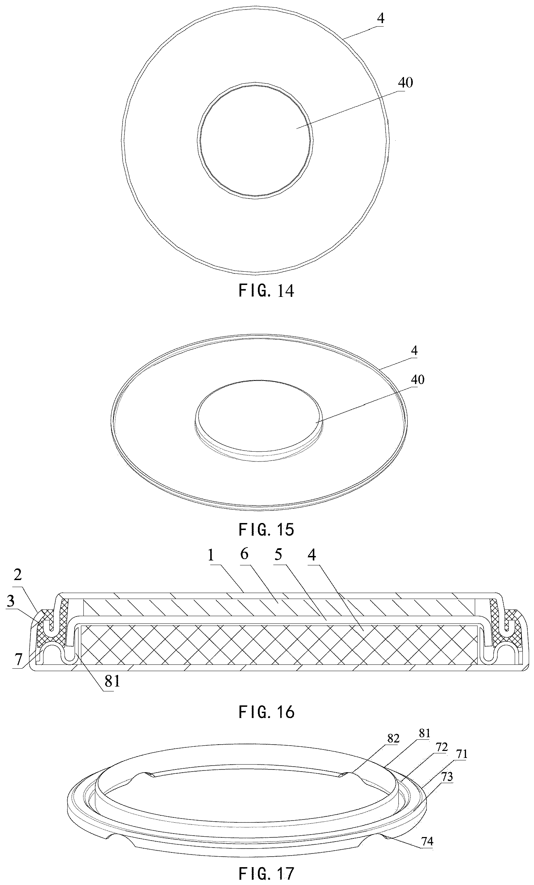

In an optional embodiment, please refer to FIGs. 16 - 17, the bottom of the inner ring wall 72 of the base 7 has an annular positioning sleeve 81 extending inward in a direction parallel to the inner ring wall 72, the positive electrode 4 is partially located in the annular positioning sleeve 81, and the annular positioning sleeve 81 is provided with a second through hole 82 for entering and exiting of electrolyte.

Here, the annular positioning sleeve 81 is located adjacent to the inner side of the sealing ring 3, the annular positioning sleeve 81 may be arranged concentrically with the outer ring wall 71 and the inner ring wall 72, and the height of the annular positioning sleeve 81 is greater than the height of the annular cavity. The second through hole 82 can be a round hole or a square hole, and can be evenly arranged on the annular positioning sleeve 81 according to actual needs.

In this way, by providing the annular positioning sleeve 81 to ensure that the positive electrode 4 is not easily moved, the stability of the battery is improved.

### Embodiment 2

Based on the same inventive concept as the above embodiment, this embodiment provides an improved CR2032 button battery. For the structure of the improved CR2032 button battery, please refer to FIGs. 2, 5, 6 and 7, the button battery comprises a negative electrode cover 1, a positive electrode case 2, a sealing ring 3, a positive electrode 4, a separating diaphragm 5, a negative electrode 6 and electrolyte, wherein the sealing ring 3 is hermetically connected with the negative electrode cover 1 and the positive electrode case 2 and makes the negative electrode cover 1 and the positive electrode case 2 form a sealing cavity, and the positive electrode 4, the separating diaphragm 5, the negative electrode 6 and the electrolyte are arranged in the sealing cavity; the button battery further comprises a base 7 arranged in the positive electrode case 2; the base 7 comprises an outer ring wall 71, an inner ring wall 72, and a top wall 73 for connecting the outer ring wall 71 with the inner ring wall 72, and the outer ring wall 71, the inner ring wall 72 and the top wall 73 form an annular cavity with an opening facing toward the bottom of the positive electrode case 2, and the top wall 73 extends toward the sealing ring 3 to form an annular protrusion 75, the annular protrusion 75 is arc-shaped, and the top wall 73 abuts against the sealing ring 3; the inner ring wall 72 is provided with a first through hole 74 for entering and exiting of electrolyte; the positive electrode 4 is partially located in an inner ring of the base 7, and the positive electrode 4 has a bidirectional boss structure, an opening of the negative electrode cover 1 is bent outward and extends upward to form a sealing edge, the sealing ring 3 is injection molded on the sealing edge, the height of the sealing ring 3 is 3mm, and the annular protrusion 75 is arranged just below the bending portion of the sealing edge; the top wall 73 of the base 7 is connected with the inner ring wall 72 and the outer ring wall 71 by arcs respectively, the radius of the arc is 0.35mm; the inner ring wall 72 and the outer ring wall 71 of the base 7 are annular walls arranged concentrically; the bottom of the inner ring wall 72 of the base 7 has a flange 76 extending inward, the flange 76 is fit and fixedly connected with the positive electrode case 2, the positive electrode 4 is fixedly connected with the flange 76, and the positive electrode 4 is partially located in an inner ring of the base 7; the outer diameter of the base 7 is fit with the inner diameter of the positive electrode case 2.

The size of the improved CR2032 button battery provided by the embodiment is substantially the same as the size of the existing CR2032 button battery. The following specific tests are used to verify the performance of the improved CR2032 button battery provided by the embodiment, as follows:

### (1) Gradient constant current discharge capacity test

In order to test the capacity performance of the battery, the improved CR2032 button battery and the existing CR2032 button battery are subjected to a fast constant current step-discharge test. The conditions of the fast constant current step-discharge test are at a temperature of 20 ± 2°C and a relative humidity of 35%-75%, continuously discharging at constant current: continuously discharging with a load of 5mA, to 2.0V, then resting for 3h; continuously discharging with a load of 2.5mA, to 2.0V. In the test, three existing CR2032 button batteries are compared with three improved CR2032 button batteries.

The comparative test results of the above gradient constant current discharge capacity test are shown in Table 1. It can be known from the comparative test that the improved CR2032 button battery provided by the embodiment of the present invention increases by about 24% during 5mA discharge capacity, and increases by about 23.4% during 5mA and 2.5mA discharge capacity. The improved CR2032 button battery provided by the embodiment of the present invention takes about 56.6% of the rated capacity during 5mA discharge capacity, while the existing CR2032 button battery takes about 31.8% of the rated capacity during 5mA discharge capacity; the improved CR2032 button battery provided by the embodiment of the present invention takes about 83.4% of the rated capacity during 5mA and 2.5mA discharge capacity, while the existing CR2032 button battery takes about 60% of the rated capacity during 5mA and 2.5mA discharge capacity. Therefore, compared with the existing CR2032 button battery, the discharge power of the improved CR2032 button battery provided by the embodiment of the present invention is increased by about 23%-24%. This is because in the improved CR2032 button battery, the outer ring wall 71, the inner ring wall 72 and the top wall 73 form an annular groove with an opening facing toward the bottom of the positive electrode case 2, and the area around the double boss structure of the positive electrode 4 can be used as the storage space of electrolyte, so that the battery has enough electrolyte for the ion conduction of the battery during the discharge, which increases the depolarization ability of the battery during the discharge, and reduces the polarization phenomenon of the solid-liquid interface, thereby increasing the power ability of the battery.

**Table 1**

| Type of battery | Capacity during 5mA discharge to 2.0V (mAh) | Percentage of rated capacity | Capacity during 2.5mA discharge to 2.0V (mAh) | Percentage of rated capacity | Sum of capacity during 5 mA and 2.5mA discharge to 2.0V (mAh) | Percentage of rated capacity | Total capacity (mAh) |
|---|---|---|---|---|---|---|---|
| Improved CR2032 | 153.96 | 57.3% | 73.89 | 27.4% | 227.85 | 84.8% | 268.7 |
| | 148.92 | 55.4% | 76.87 | 28.8% | 225.79 | 84% | 268.8 |
| | 156.51 | 57.1% | 67.15 | 24.5% | 223.66 | 81.6% | 274.1 |
| Existing CR2032 | 75.04 | 32.9% | 64.79 | 28.4% | 139.83 | 61.3% | 228.1 |
| | 72.48 | 31.5% | 60.29 | 26.2% | 132.77 | 57.7% | 230.1 |
| | 70.35 | 31.1% | 678.08 | 30.1% | 138.43 | 61.2% | 226.2 |

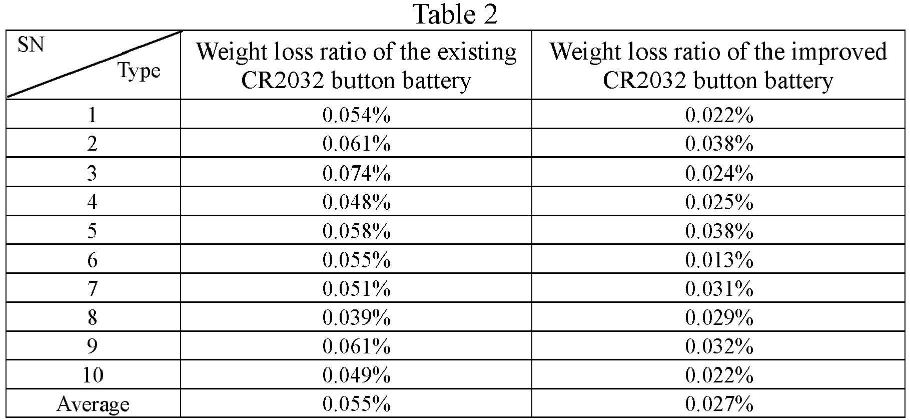

### (2) Anti-leakage performance test

The conditions of the anti-leakage performance test are: store the battery for 24h at a temperature of 60°C and -0.1Mpa pressure, and then store the battery for 5 days in a circulation box with alternating high and low temperature (70°C - -40°C), to test the weight loss ratio of the battery before and after the test. In the test, 10 existing CR2032 button batteries are compared with 10 improved CR2032 button batteries. The comparison results of the above anti-leakage performance test are shown in Table 2. It is known from multiple comparison tests that after the vacuum weight loss and then turning to high and low temperature cycles, it is found that neither of the above two batteries leaks, but the weight loss ratio of the improved CR2032 button battery provided by the embodiment of the present invention is significantly lower than that of the existing CR2032 button battery, and its anti-leakage performance is better.

### (3) Internal resistance change test

The conditions of the internal resistance change test are: the battery was stored in an oven with a temperature of 125°C for 30 days, and the voltage, internal resistance and height changes were tested respectively. Wherein, 10 of each battery are taken for test, and then the average value of 10 batteries are taken for analysis.

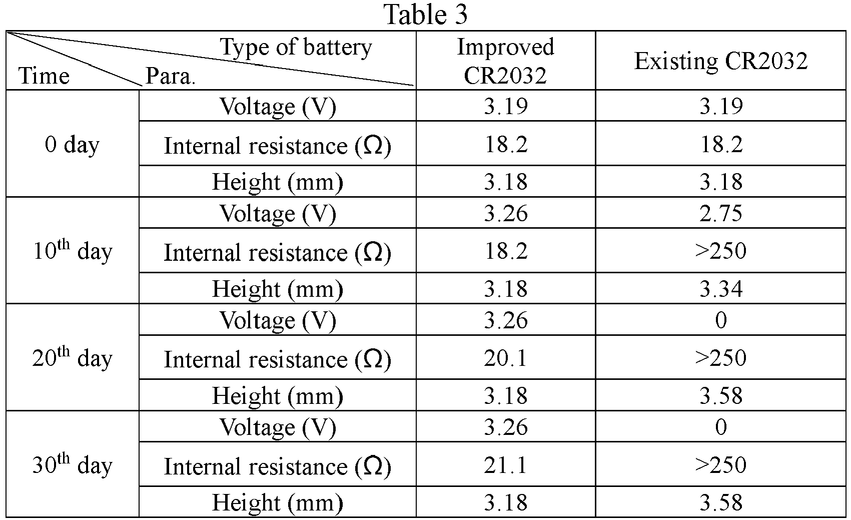

The comparison results of the above internal resistance change test are shown in Table 3. After storage at a high temperature of 125°C for one month, the existing CR2032 button battery has failed, but the improved CR2032 button battery provided by the embodiment of the present invention can still be used normally, and its internal resistance changes little.

### (4) 15K constant resistance discharge test

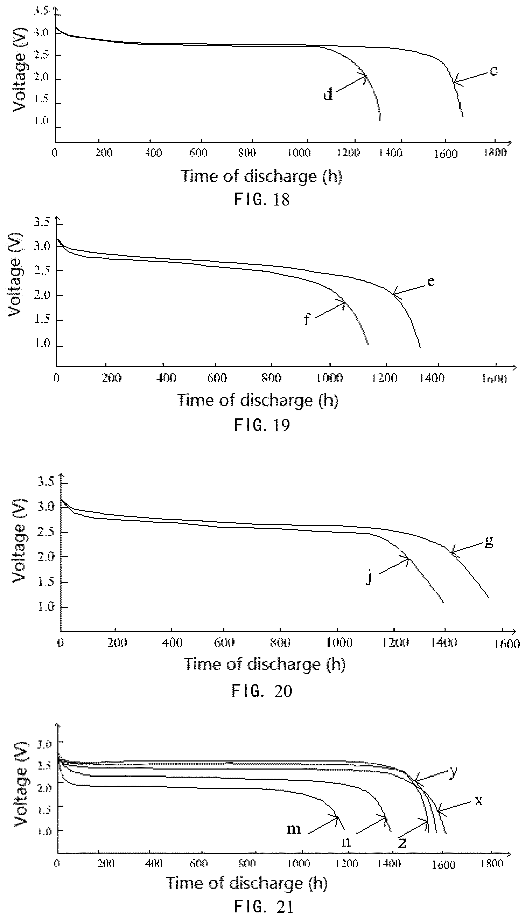

The conditions of the 15K constant resistance discharge test are: under the conditions of a temperature of 20±2°C and a relative humidity of 35%-75%, the load is continuously discharged with 15KΩ. As shown in FIG. 18, it is a schematic diagram of a 15K constant resistance discharge curve, at room temperature, of the improved CR2032 button battery and the existing CR2032 button battery. Wherein, FIG. 18(c) shows a schematic diagram of a 15K constant resistance discharge curve, at room temperature, of the improved CR2032 button battery, and FIG. 18(d) shows a schematic diagram of a 15K constant resistance discharge curve, at room temperature, of the existing CR2032 button battery. It can be seen from the curves that the discharge capacity of the improved CR2032 button battery is higher than that of the existing CR2032 button battery, the discharge capacity has been increased by about 12.5%; this is because the improved CR2032 button battery provided by the embodiment of the present invention is provided with an electrolyte storage bin composed of an annular groove and other spaces, which can provide sufficient electrolyte to ensure the ion conductivity of the battery during the discharge, improving the utilization of the positive electrode active material.

As shown in FIG. 19, it is a schematic diagram of a 15K constant resistance discharge curve of the improved CR2032 button battery and the existing CR2032 button battery after storing at 60°C for 40 days, wherein, FIG. 19(e) shows a schematic diagram of a 15K constant resistance discharge curve of the improved CR2032 button battery after storing at 60°C for 40 days, and FIG. 19(f) shows a schematic diagram of a 15K constant resistance discharge curve of the existing CR2032 button battery after storing at 60°C for 40 days. According to the equivalent formula for high-temperature storage: t(T)=t(20°C)/2n, storing at 60°C for 40 days is equivalent to storing at room temperature 20°C for 2 years; it can be seen from the curves that the existing CR2032 button battery can only be kept at 85% of its capacity after storing at 60°C for 40 days.

As shown in FIG. 20, it is a schematic diagram of a 15K constant resistance discharge curve of the improved CR2032 button battery and the existing CR2032 button battery after storing at 85°C for 40 days, wherein, FIG. 20(g) shows a schematic diagram of a 15K constant resistance discharge curve of the improved CR2032 button battery after storing at 85°C for 40 days, and FIG. 20(j) shows a schematic diagram of a 15K constant resistance discharge curve of the existing CR2032 button battery after storing at 85°C for 40 days. According to the equivalent formula for high-temperature storage: t(T)=t(20°C)/2n, storing at 85°C for 40 days is equivalent to storing at room temperature 20°C for 10 years; it can be seen from the curves that the improved CR2032 button battery provided by the embodiment of the present invention can only be kept at more than 95% of its capacity after storing at 85°C for 40 days, which means that the improved CR2032 button battery provided by the embodiment of the present invention has good storage performance and reduced capacity.

As shown in FIG. 21, it is a schematic diagram of a 15K constant resistance discharge curve of the improved CR2032 button battery and the existing CR2032 button battery at -40°C, -20°C, 23°C, 85°C, 125°C respectively, wherein, FIG. 21(m) shows a schematic diagram of a 15K constant resistance discharge curve of the improved CR2032 button battery at -40°C, FIG. 21(n) shows a schematic diagram of a 15K constant resistance discharge curve of the improved CR2032 button battery at -20°C, FIG. 21(x) shows a schematic diagram of a 15K constant resistance discharge curve of the improved CR2032 button battery at 23°C, FIG. 21(y) shows a schematic diagram of a 15K constant resistance discharge curve of the improved CR2032 button battery at 85°C, FIG. 21(z) shows a schematic diagram of a 15K constant resistance discharge curve of the improved CR2032 button battery at 125°C. Since the operating temperature range of the existing CR2032 button battery is -20°C ~ +70°C, it can be seen from the curves of the above schematic diagram that the improved CR2032 button battery provided by the embodiment of the present invention still shows good discharge performance at -40°C and +125°C, which means that compared with the existing CR2032 button battery, the improved CR2032 button battery provided by the embodiment of the present invention extends the operating temperature range of the battery and has a wider application range.

### (5) Collision test

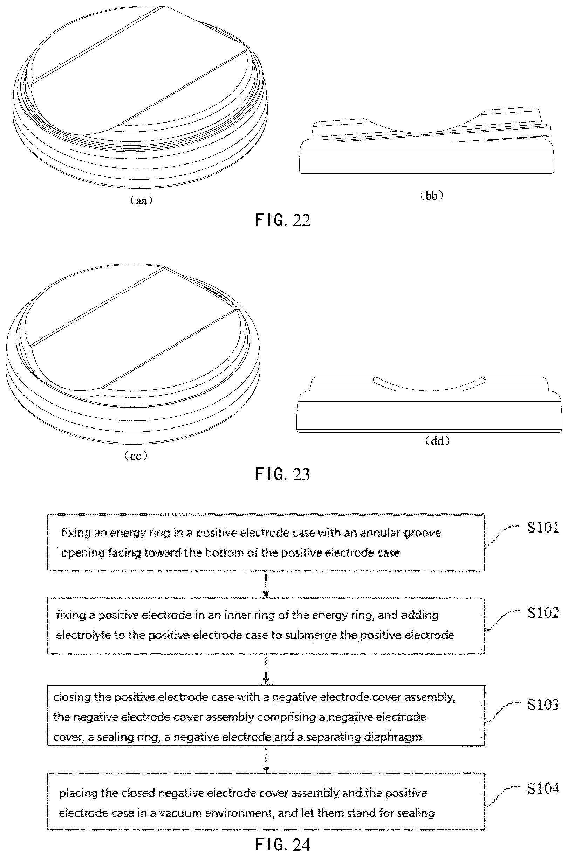

Fixing the existing CR2032 button battery and the improved CR2032 button battery on the surface of the collision test platform respectively, using the hook to lift a 9.1kg weight to 610mm from the surface of the collision test platform and placing the weight just above the battery, then releasing the weight to allow it to fall freely and collide with the battery placed just below the weight. As shown in FIGs. 22 and 23, FIG. 22(aa) is a schematic diagram of the 3D structure of the existing CR2032 button battery after collision, from a view angle; FIG. 22(bb) is a schematic diagram of the 3D structure of the existing CR2032 button battery after collision, from another view angle; FIG. 23(cc) is a schematic diagram of the 3D structure of the improved CR2032 button battery after collision, from a view angle; FIG. 23(dd) is a schematic diagram of the 3D structure of the improved CR2032 button battery after collision, from another view angle. It can be seen from the above figure that the deformation degree of the improved CR2032 button battery is significantly smaller than that of the existing CR2032 button battery, which means that the mechanical performance of the improved CR2032 button battery is better than that of the existing CR2032 button battery.

### Embodiment 3

Based on the same inventive concept as the above embodiment, this embodiment provides an improved CR2450 button battery. Please refer to FIG. 2 and 9, the improved CR2450 button battery comprises a negative electrode cover 1, a positive electrode case 2, a sealing ring 3, a positive electrode 4, a separating diaphragm 5, a negative electrode 6 and electrolyte, wherein the sealing ring 3 is hermetically connected with the negative electrode cover 1 and the positive electrode case 2 and makes the negative electrode cover 1 and the positive electrode case 2 form a sealing cavity, and the positive electrode 4, the separating diaphragm 5, the negative electrode 6 and the electrolyte are arranged in the sealing cavity; the button battery further comprises a base 7 arranged in the positive electrode case 2; the base 7 comprises an outer ring wall 71, an inner ring wall 72, and a top wall 73 for connecting the outer ring wall 71 with the inner ring wall 72, and the outer ring wall 71, the inner ring wall 72 and the top wall 73 form an annular cavity with an opening facing toward the bottom of the positive electrode case 2, and the top wall 73 extends toward the sealing ring 3 to form an annular protrusion 75, the annular protrusion 75 is arc-shaped, and the top wall 73 abuts against the sealing ring 3; the inner ring wall 72 is provided with an upward first through hole and a lower first through hole for entering and exiting of electrolyte; the positive electrode 4 is partially located in an inner ring of the base 7, and the positive electrode 4 has a bidirectional boss structure, an opening of the negative electrode cover 1 is bent outward and extends upward to form a sealing edge, the sealing ring 3 is injection molded on the sealing edge, the height of the sealing ring 3 is 3mm, and the annular protrusion 75 is arranged just below the bending portion of the sealing edge; the top wall 73 of the base 7 is connected with the inner ring wall 72 and the outer ring wall 71 by arcs respectively, the radius of the arc is 0.35mm; the inner ring wall 72 and the outer ring wall 71 of the base 7 are annular walls arranged concentrically; the bottom of the inner ring wall 72 of the base 7 has a flange 76 extending inward, the flange 76 is fit and fixedly connected with the positive electrode case 2, the positive electrode 4 is fixedly connected with the flange 76, and the positive electrode 4 is partially located in an inner ring of the base 7; the outer diameter of the base 7 is fit with the inner diameter of the positive electrode case 2, the outer ring wall 71 of the base 7 is provided with an elastic protrusion 77, and the base 7 is buckle-connected with the positive electrode case 2 through the elastic protrusion 77; the bottom of the base 7 is provided with a fixing piece 78 and three connecting pieces 79 connecting the fixing piece 78 with the inner ring wall 72 of the base 7; the fixing piece 78 is connected with the positive electrode case 2. Wherein, the diameter of the battery is 24.5mm, the height of the battery is 5.0mm, the diameter of the inner ring wall is 19.6mm, the diameter of the outer ring wall is 23.8mm, the height between the top wall and the bottom of the inner ring wall is 2.7mm, the inclination angle of the inner side of the top wall is 60 degrees, the top wall, the inner ring wall and the outer ring wall are provided with a chamfered round corner between two of them, the upper first through hole is provided on the inner side of the top wall, the upper first through hole and the lower first through hole are staggered, the number of each of them is 4, and the diameter of each of them is 0.8mm, the thickness of the sealing ring is 2mm, the flange is an annular plane that is flush with the lower end of the outer ring wall and the inner diameter of the flange is 17mm.

In addition, the annular protrusion is arc-shaped, the top wall is connected with the inner ring wall and the outer ring wall by arcs respectively, the radius of the arc is 0.4mm. The ratio of the height of the convex portion of the boss to the overall height of the boss is 0.15:1, and the ratio of the diameter of the convex portion of the boss to the maximum diameter of the boss is 0.90:1.

The size of the improved CR2450 button battery provided by the embodiment is substantially the same as the size of the existing CR2450 button battery. The height of each of the existing CR2450 button battery and the improved CR2450 button battery is 5mm, which meets the height standard [4.7mm, 5mm] of the CR2450 button battery specified by the International Electro technical Commission (IEC). The following specific tests are used to verify the performance parameters of the improved CR2450 button battery provided by the embodiment, as follows:

### (1) Height change test

The heights of 9 existing CR2450 button batteries and 9 improved CR2450 button batteries are detected after they are fully discharged. By comparing the heights of the above button batteries before discharge and after fully discharge, it is judged whether two different button batteries are deformed and what the extent of deformation is. The height of the existing CR2450 button battery used in the test is also 5mm. The results of the height change test are shown in Table 4, and the unit of the number in Table 4 is millimeter (mm). It can be known from the table that the height of the existing CR2450 button battery is 0.24-0.34mm higher after fully discharge than before discharge, which means that during the discharge, the gas generated in the existing CR2450 button battery increases the internal pressure, which leads to the expansion and deformation of the existing CR2450 button battery. However, the height of the improved CR2450 button battery changes little before and after discharge, which means that the improved CR2450 button battery has an annular groove formed by the outer ring wall 71, the inner ring wall 72 and the top wall 73 and with an opening facing towards the bottom of the positive electrode case 2, and has the double boss structure of the positive electrode 4, the gas generated during the discharge can be stored in the annular groove, which effectively reduces the gas pressure inside the battery and reduces the expansion and deformation of the battery.

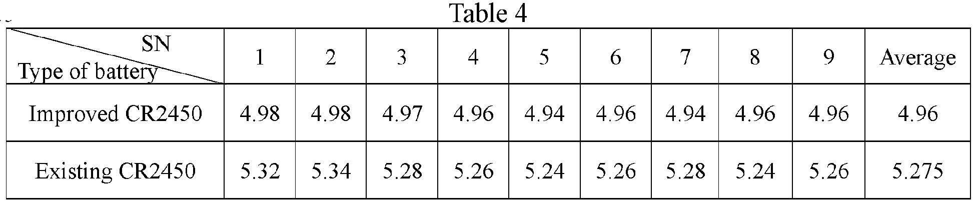

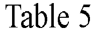

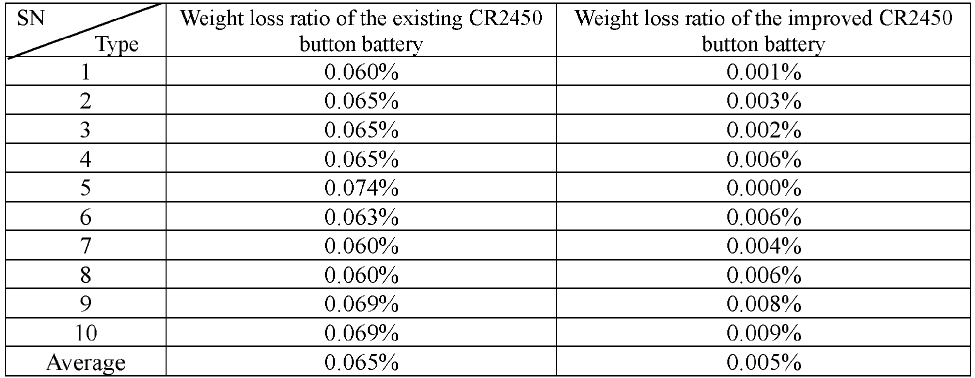

### (2) Anti-leakage performance test

The conditions of the anti-leakage performance test are: store 10 existing CR2450 button batteries and 10 improved CR2450 button batteries for 24h at a temperature of 60°C and -0.1Mpa pressure, and then store the batteries for 5 days in a circulation box with alternating high and low temperature (70°C ∼ -40°C), to test the voltage, internal resistance and the weight loss ratio of the battery before and after the test.

The comparison results of the above anti-leakage performance test are shown in Table 5. It is known from analysis that since IEC specifies that the weight loss ratio of the button battery should be less than 0.1%, both the existing CR2450 button battery and the improved CR2450 button battery meet the above requirement. However, the average weight loss ratio of the improved CR2450 button battery is 0.005%, which is an order of magnitude lower than the average weight loss ratio of the existing CR2450 button battery, which means that in the improved CR2450 button battery, the top wall 73 has an annular protrusion 75 formed by extending toward the sealing ring 3, so that the contact between the sealing ring 3 and the negative electrode cover 1 and the positive electrode case 2 is tight, thus the battery has better sealing performance, better anti-leakage performance and storage performance.

### Embodiment 4

Based on the same inventive concept as the above embodiment, please refer to FIG. 24, which shows a method for preparing a button battery provided by the embodiment of the present invention, the method comprises steps:
S101: fixing a base in a positive electrode case with an annular groove opening facing toward the bottom of the positive electrode case;
Specifically, the opening of the positive electrode case faces upward, and the annular groove opening of the base faces downward and is placed in the positive electrode case by welding or not welding, and the base and the positive electrode case are arranged concentrically.

Here, when the base has a flange, it can be placed in the positive electrode case without welding; when the base has a fixing piece, it can be placed in the positive electrode case by welding.
S102: fixing a positive electrode in an inner ring of the base, and adding electrolyte to the positive electrode case to submerge the positive electrode;
   Specifically, the positive electrode is placed into the base and compacted, the positive electrode partially protrudes from the base, the electrolyte is added into the positive electrode case to submerge the positive electrode, and the positive electrode is soaked for a period of time under the vacuum condition.
S103: closing the positive electrode case with a negative electrode cover assembly, the negative electrode cover assembly comprising a negative electrode cover, a sealing ring, a negative electrode and a separating diaphragm;
   Specifically, the opening of the negative electrode cover assembly containing the negative electrode and the separating diaphragm faces downward, and then the negative electrode cover assembly is inserted into the positive electrode case containing the positive electrode, and the sealing ring directly faces the top wall of the base to form a seal.

Here, a sealing ring is injection molded on the outer edge of the negative electrode cover, the negative electrode formed by stamping is placed in the negative electrode cover by a square rounding process, and then a separating diaphragm is applied to form a negative electrode cover assembly including the negative electrode cover, the sealing ring, the negative electrode and the separating diaphragm.

S104: placing the closed negative electrode cover assembly and the positive electrode case in a vacuum environment, and let them stand for sealing.

In conclusion, compared with the prior art, the button battery and the preparation method thereof provided by the embodiments of the present invention have the advantageous effects of cleverly designing the structure of the base and the positive electrode, and improving the manufacturing method of the battery, so that the button battery integrates various advantages such as good anti-leakage performance, good stability, high capacity, long life, and simple manufacturing process. Specifically,
(1) In terms of anti-leakage sealing performance: through the design of the shape, structure and position of the base, especially the groundbreaking arrangement of the annular protrusion, the research and development of its shape, position and size greatly improves the sealing effect of the sealing ring of the battery; and through the development of the positive electrode of boss type and the role of the annular cavity structure of the base, the problem of electrolyte leakage due to the expansion of the battery is effectively avoided.
(2) In terms of stability: through multiple support of the outer ring wall, the top wall and the inner ring wall of the base, as well as the support and limitation of the annular cavity of the base to the positive electrode, the relative displacement between the negative electrode cover, the sealing ring, the negative electrode, the positive electrode, the base and the positive electrode case can be prevented effectively, which improves the whole stability of the battery to ensure its quality of usage and increase its life; and through the design of the installation of the base and the positive electrode case, especially on the basis of the fixed connection of the base and the positive electrode case, the buckle can be used for further positioning, which further improves the stability between the positive electrode case and the base; in addition, the positive electrode is separately soaked in the positive electrode case, instead of using the existing concentrated soaking of the positive electrode, which ensures the quality of the soaking electrolyte, so that the moisture content and other parameters of the soaking electrolyte are always consistent, thereby making the quality of the battery more stable.
(3) In terms of capacity performance: compared with the prior art, the arrangement of the base can ensure that the sealing effect is improved, while reducing the thickness of the sealing ring, reducing the space occupied by the sealing ring to increase the volume of the electrolyte, and realizing improvement of battery discharge capacity and discharge power.
(4) In terms of manufacturing process: because the button battery itself is a micro-device, it requires high precision in production and processing; and the structure design of the base provided by the embodiments of the present invention is easy to implement in engineering and reduces the requirements on processing precision; and in terms of installation, the buckle can be used between the base and the positive electrode case, which is easy to operate and reduces the difficulty of installation; secondly, it is unnecessary to add rings to the previous positive electrode case with rings, which simplifies the process; at the same time, the traditional process of concentrated soaking of the positive electrode is cancelled, which saves the amount of electrolyte used, thereby reducing the cost; at the same time, since each battery is independently and quantitatively injected with new electrolyte, the amount of electrolyte in each battery and the content of trace moisture are the same, so the consistency of the battery is improved. Moreover, both the negative electrode cover and the positive electrode case are compatible with the existing battery, which reduces the research and development cost; and for batteries with different thicknesses, the same negative electrode cover can be used, only the size of the base needs to be adjusted, which simplifies the production of the negative electrode cover and makes it suitable for products with different thicknesses.
(5) In terms of service life: compared with the conventional button battery, the button battery provided by the embodiments of the present invention can increase their life by 7% ~ 10%.

## Claims

1. A button battery, comprising a negative electrode cover (1), a positive electrode case (2), a sealing ring (3), a positive electrode (4), a separating diaphragm (5), a negative electrode (6) and electrolyte, wherein the sealing ring (3) is hermetically connected with the negative electrode cover (1) and the positive electrode case (2) and makes the negative electrode cover (1) and the positive electrode case (2) form a sealing cavity, and the positive electrode (4), the separating diaphragm (5), the negative electrode (6) and the electrolyte are arranged in the sealing cavity; **characterized in that** the button battery further comprises a base (7) arranged in the positive electrode case (2); the base (7) comprises an outer ring wall (71), an inner ring wall (72), and a top wall (73) for connecting the outer ring wall (71) with the inner ring wall (72), and the outer ring wall (71), the inner ring wall (72) and the top wall (73) form an annular cavity, and the top wall (73) abuts against the sealing ring (3); the annular cavity is provided with a first through hole (74) for entering and exiting of electrolyte and/or gas; the positive electrode (4) is located in an inner ring of the base (7), and an upper end face of the positive electrode (4) has a boss structure and a lower end face of the positive electrode (4) is provided with a chamfer; the top wall (73) of the base (7) extends toward the sealing ring (3) to form an annular protrusion (75);
an opening of the negative electrode cover (1) is bent outward and extends upward to form a sealing edge, and the sealing ring (3) is arranged on the sealing edge to seal the gap between an opening of the positive electrode case (2) and an opening of the negative electrode cover (1); the annular protrusion (75) is arranged just below the bending portion of the sealing edge;
the top wall (73) of the base (7) is connected with the inner ring wall (72) and the outer ring wall (71) by arcs respectively;
the inner ring wall (72) and the outer ring wall (71) of the base (7) are annular walls arranged concentrically, and the annular cavity is an annular groove with an opening facing toward the bottom of the positive electrode case (2);
**characterized in that** the bottom of the inner ring wall (72) of the base (7) has a flange (76) extending inward in a direction perpendicular to the inner ring wall (72), and the flange (76) is fit with the positive electrode case (2);
the outer diameter of the base (7) is adapted to the inner diameter of the positive electrode case (2), the outer ring wall (71) of the base (7) is provided with an elastic protrusion (77), and the base (7) is buckle-connected with the positive electrode case (2) through the elastic protrusion (77).

2. A button battery according to claim 1, **characterized in that** the bottom of the base (7) is provided with a fixing piece (78) and at least one connecting piece (79) connecting the fixing piece (78) with the flange (76); the fixing piece (78) is connected with the positive electrode case (2).

3. A button battery according to claim 1, **characterized in that** the sealing ring (3) is provided with an annular embedding groove (30) adapted to the annular protrusion (75) toward the bottom of the base (7).

## Patentansprüche

1. - Knopfbatterie, umfassend eine Abdeckung (1) der negativen Elektrode, ein Gehäuse (2) der positiven Elektrode, einen Dichtring (3), eine positive Elektrode (4), eine Trennmembran (5), eine negative Elektrode (6) und einen Elektrolyt, wobei der Dichtring (3) hermetisch mit der Abdeckung (1) der negativen Elektrode und dem Gehäuse (2) der positiven Elektrode verbunden ist und verursacht, dass die Abdeckung (1) der negativen Elektrode und das Gehäuse (2) der positiven Elektrode einen Dichtungshohlraum bilden und die positive Elektrode (4), die Trennmembran (5), die negative Elektrode (6) und der Elektrolyt im Dichtungshohlraum angeordnet sind; **dadurch gekennzeichnet, dass** die Knopfbatterie weiter eine Basis (7) umfasst, die im Gehäuse (2) der positiven Elektrode angeordnet ist; die Basis (7) eine äußere Ringwand (71), eine innere Ringwand (72) und eine obere Wand (73) umfasst, um die äußere Ringwand (71) mit der inneren Ringwand (72) zu verbinden, und die äußere Ringwand (71), die innere Ringwand (72) und die obere Wand (73) einen ringförmigen Hohlraum bilden und die obere Wand (73) gegen den Dichtring (3) stößt; der ringförmige Hohlraum mit einem erste Durchgangsloch (74) ausgestattet ist, um einen Elektrolyt und/oder Gas einzuführen und zu entnehmen; sich die positive Elektrode (4) in einem inneren Ring der Basis (7) befindet und eine obere Endseite der positiven Elektrode (4) eine Wulststruktur aufweist und eine untere Endseite der positiven Elektrode (4) mit einer Abschrägung ausgestattet ist; sich die obere Wand (73) der Basis (7) hin zum Dichtring (3) erstreckt, um einen ringförmigen Vorsprung (75) zu bilden;
eine Öffnung der Abdeckung (1) der negativen Elektrode nach außen gebogen ist und sich nach oben erstreckt, um eine Dichtungskante zu bilden, und der Dichtring (3) auf der Dichtungskante angeordnet ist, um den Zwischenraum zwischen einer Öffnung des Gehäuses (2) der positiven Elektrode und einer Öffnung der Abdeckung (1) der negativen Elektrode abzudichten; die ringförmiger Vorsprung (75) genau unter dem Biegeabschnitt der Dichtungskante angeordnet ist;
die obere Wand (73) der Basis (7) mit der inneren Ringwand (72) bzw. der äußeren Ringwand (71) durch Bögen verbunden ist;
die innere Ringwand (72) und die äußere Ringwand (71) der Basis (7) ringförmige Wände sind, die konzentrisch angeordnet sind, und der ringförmige Hohlraum eine ringförmige Nut ist, die eine Öffnung hin zum unteren Teil des Gehäuses (2) der positiven Elektrode zeigt,
**dadurch gekennzeichnet, dass** der untere Teil der inneren Ringwand (72) der Basis (7) einen Flansch (76) aufweist, der sich nach innen in eine Richtung senkrecht zur inneren Ringwand (72) erstreckt, und der Flansch (76) zum Gehäuse (2) der positiven Elektrode gepasst ist;
der äußere Durchmesser der Basis (7) an den inneren Durchmesser des Gehäuses (2) der positiven Elektrode angepasst ist, die äußere Ringwand (71) der Basis (7) mit einem elastischen Vorsprung (77) ausgestattet ist und die Basis (7) mit dem Gehäuses (2) der positiven Elektrode durch den elastischen Vorsprung (77) schnallenverbunden ist.

2. - Knopfbatterie nach Anspruch 1, **dadurch gekennzeichnet, dass** der untere Teil der Basis (7) mit einem Befestigungsstück (78) und mindestens einem Verbindungsstück (79) ausgestattet ist, das das Befestigungsstück (78) mit dem Flansch (76) verbindet; das Befestigungsstück (78) mit dem Gehäuse (2) der positiven Elektrode verbunden ist.

3. - Knopfbatterie nach Anspruch 1, **dadurch gekennzeichnet, dass** der Dichtring (3) mit einer ringförmigen Einbettungsnut (30) ausgestattet ist, die an den ringförmigen Vorsprung (75) hin zum unteren Teil der Basis (7) angepasst ist.

## Revendications

1. - Pile bouton, comprenant un couvercle d'électrode négative (1), un boîtier d'électrode positive (2), une bague d'étanchéité (3), une électrode positive (4), un diaphragme de séparation (5), une électrode négative (6) et de l'électrolyte, la bague d'étanchéité (3) étant reliée hermétiquement au couvercle d'électrode négative (1) et au boîtier d'électrode positive (2) et amenant le couvercle d'électrode négative (1) et le boîtier d'électrode positive (2) à former une cavité étanche, et l'électrode positive (4), le diaphragme de séparation (5), l'électrode négative (6) et l'électrolyte étant disposés dans la cavité étanche ; **caractérisée par le fait que** la pile bouton comprend en outre une base (7) disposée dans le boîtier d'électrode positive (2) ; la base (7) comprend une paroi de bague externe (71), une paroi de bague interne (72) et une paroi supérieure (73) pour relier la paroi de bague externe (71) à la paroi de bague interne (72), et la paroi de bague externe (71), la paroi de bague interne (72) et la paroi supérieure (73) forment une cavité annulaire, et la paroi supérieure (73) vient en butée contre la bague d'étanchéité (3) ; la cavité annulaire comporte un premier trou traversant (74) pour l'entrée et la sortie d'électrolyte et/ou de gaz ; l'électrode positive (4) est située à l'intérieur d'une bague interne de la base (7), et une face d'extrémité supérieure de l'électrode positive (4) a une structure de bossage et une face d'extrémité inférieure de l'électrode positive (4) comporte un chanfrein ; la paroi supérieure (73) de la base (7) s'étend vers la bague d'étanchéité (3) pour former une saillie annulaire (75) ;
une ouverture du couvercle d'électrode négative (1) est pliée vers l'extérieur et s'étend vers le haut pour former un bord d'étanchéité, et la bague d'étanchéité (3) est disposée sur le bord d'étanchéité pour sceller de manière étanche l'intervalle entre une ouverture du boîtier d'électrode positive (2) et une ouverture du couvercle d'électrode négative (1) ; la saillie annulaire (75) est disposée juste au-dessous de la partie pliée du bord d'étanchéité ;
la paroi supérieure (73) de la base (7) est reliée à la paroi de bague interne (72) et à la paroi de bague externe (71) par des arcs, respectivement ;
la paroi de bague interne (72) et la paroi de bague externe (71) de la base (7) sont des parois annulaires disposées de manière concentrique, et la cavité annulaire est une rainure annulaire dont l'ouverture est dirigée vers la partie inférieure du boîtier d'électrode positive (2) ;
**caractérisée par le fait que** la partie inférieure de la paroi de bague interne (72) de la base (7) a une bride (76) s'étendant vers l'intérieur dans une direction perpendiculaire à la paroi de bague interne (72), et la bride (76) s'adapte au boîtier d'électrode positive (2) ;
le diamètre extérieur de la base (7) est adapté au diamètre intérieur du boîtier d'électrode positive (2), la paroi de bague externe (71) de la base (7) comporte une saillie élastique (77), et la base (7) est reliée par déformation élastique au boîtier d'électrode positive (2) par l'intermédiaire de la saillie élastique (77).

2. - Pile bouton selon la revendication 1, **caractérisée par le fait que** la partie inférieure de la base (7) comporte une pièce de fixation (78) et au moins une pièce de liaison (79) reliant la pièce de fixation (78) à la bride (76) ; la pièce de fixation (78) est reliée au boîtier d'électrode positive (2).

3. - Pile bouton selon la revendication 1, **caractérisée par le fait que** la bague d'étanchéité (3) comporte une rainure d'encastrement annulaire (30) adaptée à la saillie annulaire (75), vers la partie inférieure de la base (7).
